# EUROPÄISCHE PATENTSCHRIFT

(11) **EP 3 724 684 B1**
(45) Veröffentlichungstag und Bekanntmachung des Hinweises auf die Patenterteilung: **29.05.2024**
(21) Anmeldenummer: 18804312.9
(22) Anmeldetag: 16.11.2018
(51) Int. Cl.: G01S 7/4863, G01S 17/42, G01S 17/89, G01S 7/481, G01S 7/487

(54) **LIDAR EMPFANGSEINHEIT**
LIDAR RECEIVING UNIT
UNITÉ DE RÉCEPTION LIDAR

(30) Priorität: 15.12.2017 DE 102017222971
(43) Veröffentlichungstag der Anmeldung: 21.10.2020
(73) Patentinhaber: MicroVision, Inc., Redmond, WA 98052 (US)
(72) Erfinder: BEUSCHEL, Ralf, 88239 Wangen (DE); KIEHN, Michael, 22143 Hamburg (DE)
(74) Vertreter: RGTH
(86) Internationale Anmeldenummer: PCT/EP2018/081586
(87) Internationale Veröffentlichungsnummer: WO 2019/115148

(56) Entgegenhaltungen:
- EP-A1- 2 708 913
- US-A1- 2012 249 998

## Beschreibung

Die Erfindung betrifft eine LIDAR Empfangseinheit.

Aus der WO 2017 081 294 ist ein LIDAR Messsystem bekannt. Dieses LIDAR-Messsystem weist unter anderem eine Sendeeinheit, eine Sendeoptik, eine Empfangsoptik sowie eine Empfangseinheit auf. Dabei wird von einem oder mehreren Emitterelementen der Sendeeinheit ein Laserlicht emittiert, welches über die Senderoptik in verschiedene Raumrichtungen gestreut wird. Das Laserlicht wird dann an einem Objekt reflektiert und über die Empfangsoptik zur Empfangseinheit geleitet. Das eintreffende reflektierte Laserlicht wird von Sensorelementen detektiert. Vorteil dieses Systems ist, dass dieses kompakt gebaut werden kann und statisch ist, also keine beweglichen Verstellelemente für die Emitterelemente und die Sensorelemente benötigt.

Der Senderaum, in dem die Sendeeinheit das Laserlicht ausstrahlt ist durch die Senderoptik definiert. Diese Senderoptik entspricht im Wesentlichen auch der Empfangsoptik. Die Emitterelemente sowie die Sensorelemente sind auf einer Ebene der jeweiligen Einheit in derselben räumlichen Konfiguration angeordnet. Ein Sensorelement ist jeweils einem Emitterelement zugeordnet, sodass ein solches Paar über die jeweilige Optik denselben Raumwinkel betrachtet. Dabei kann die Verteilung der Emitterelemente und der Sensorelemente beispielsweise zeilen- und spaltenförmig ausgeführt sein. Im Optimalfall trifft das von dem Emitterelement emittierte und an einem Objekt reflektierte Laserlicht genau auf das zugehörige Sensorelement. Das Laserlicht kann jedoch abgelenkt werden, beispielsweise durch Abbildungsfehler der verwendeten Optiken, sodass nur eine Teilfläche des Sensorelements beleuchtet wird.

EP 2 708 913 A1 offenbart einen optoelektronischen Sensor mit einem Lichtempfänger, der eine Vielzahl von Lawinenphotodiodenelementen zur Erfassung von Empfangslicht aus einem Überwachungsbereich aufweist.

US 2012/0249998 A1 betrifft eine Vorrichtung zur optischen Distanzmessung.

Es ist daher Aufgabe eine Empfangseinheit bereit zu stellen, die eine verbesserte Detektion von eingehendem Laserlicht ermöglicht.

Diese Aufgabe wird gelöst durch eine LIDAR-Empfangseinheit gemäß dem Patentanspruch 1.

Es wird eine LIDAR Empfangseinheit für ein LIDAR Messsystem vorgeschlagen. Auch das LIDAR Messsystem mit der LIDAR Empfangseinheit löst die obige Aufgabe. Insbesondere ist das LIDAR zur statischen, also unbeweglichen Anordnung an einem Kraftfahrzeug ausgebildet. Die LIDAR Empfangseinheit ist in deren Grundzügen entsprechend der Ausführungen zum Stand der Technik ausgebildet. Die LIDAR Empfangseinheit umfasst mehrere Sensorelemente, die in Makrozellen angeordnet sind. Dementsprechend ist eine Zuweisung nun nicht mehr, wie im Stand der Technik, Emitterelement zu Sensorelement, sondern Emitterelement zu Makrozelle, also zu mehreren Sensorelementen. Demnach ist eine Makrozelle an der Empfangseinheit nicht beliebig definierbar, sondern im Wesentlichen einem definierten Raumwinkel zugeordnet.

Die LIDAR Empfangseinheit ist in einer Focal Plane Array Konfiguration ausgebildet. Die Sensorelemente der Empfangseinheit sind dabei im Wesentlichen auf einer Ebene, günstigerweise auf einem Chip, angeordnet. Die Empfangseinheit wird zudem an dem LIDAR Messsystem in einem Brennpunkt einer Empfangsoptik angeordnet. Insbesondere sind die Sensorelementen der LIDAR Empfangseinheit im Brennpunkt der Empfangsoptik angeordnet.

Ein Sensorelement kann beispielsweise durch eine Single Photon Avalanche Diode ausgebildet sein, im Weiteren auch SPAD genannt. Derartige SPAD sind Lawinendioden, die bereits bei dem Eintreffen eines einzigen Photons einen Lawineneffekt auslösen und dadurch eine Detektion dieses Photons ermöglichen. Solche SPAD können über das Anlegen einer Vorspannung aktiviert werden. Ein entsprechendes Absenken der Spannung führt zu einer Deaktivierung der SPAD. Als alternatives Sensorelement kann beispielsweise ein Silicon Photomultiplier, auch SiPM genannt, verwendet werden.

Die Anordnung innerhalb einer Makrozelle bedeutet die Zusammenfassung der Sensorelemente zu einem größeren Komplex. Diese Zusammenfassung bzw. Makrozelle kann dabei hardwareseitig oder softwareseitig realisiert sein, wobei ersteres in Form einer festen elektrischen Verschaltung bevorzugt ist. Diese Verschaltung kann beispielsweise auf dem Chip ausgebildet sein, auf dem die Sensorelemente angeordnet sind.

Des Weiteren weist die LIDAR-Empfangseinheit mehrere Ausleseelemente auf. Ein Ausleseelement ist erfindungsgemäß als Zeit-Digital-Wandler ausgebildet, auch Time to Digital Converter (TDC), genannt. Dieses Ausleseelement erfasst das Auslösen des Sensorelements, bzw. der SPAD, und gibt diese Detektion an ein Speicherelement weiter. Das Speicherelement bildet vorzugsweise ein Histogramm ab, welches die Auslösung des Sensorelements in Abhängigkeit von der Zeit speichert. Die Zeit beginnt mit dem Aussenden eines Laserlichts durch ein Emitterelement und endet mit Abschluss des Messzyklus. Dadurch lässt sich eine Laufzeit des Laserlichts und demnach ein Abstand eines Objekts ermitteln. Der konkrete technische Aufbau von Ausleseelement und Speicherelement kann im Hinblick auf die Erfindung vernachlässigt werden. Es ist letztlich wichtig, dass die Sensorelemente Photonen detektieren, die als digitaler Wert innerhalb eines Histogramms gespeichert werden, wobei der maßgebliche Faktor die verstrichene Zeit seit dem Aussenden des Laserlichts durch das zugehörige Emitterelement des LIDAR Messsystems ist.

Besonders vorteilhaft wird für das LIDAR Messsystem das TCSPC Verfahren, Time Corresponding Single Photon Counting, verwendet. Zur Detektierung eines Objekts und zur Ermittlung dessen Abstands wird ein Messvorgang ausgeführt, der mehrere solcher Messzyklen umfasst. Jeder Messzyklus befüllt das Histogramm, welches nach der letzten Messung zur Ermittlung von Objekten und deren Abstand ausgewertet wird. Es sind zumindest zwei Sensorelemente einer Makrozelle zugeordnet. Mit Vorteil ist die Anzahl der Sensorelemente einer Makrozelle größer als zwei, insbesondere liegt diese zwischen zwei und vierzig Sensorelementen pro Makrozelle.

Die Sensorelemente sind einzeln oder in Gruppen aktivierbar und deaktivierbar. Dies kann beispielsweise über eine hardwareseitige Verschaltung der SPAD geschehen, die einzeln oder in Gruppen mit einer Steuerelektronik verbunden sind. Die erste Variante wird bevorzugt, wobei dementsprechend auch jedes Sensorelement einer Makrozelle einzeln aktivierbar ist. Die gruppenweise Aktivierung beschränkt sich dabei günstigerweise auf eine Untermenge oder die Gesamtzahl der Sensorelemente einer Makrozelle, die dann gleichzeitig aktiviert und deaktiviert werden können. Die Makrozelle kann ein, zwei, drei, vier oder mehr Untermengen an Sensorelementen aufweisen.

Durch die Möglichkeit einzelne Sensorelemente oder Gruppen von Sensorelementen zu aktivieren oder zu deaktivieren, können Störfaktoren ausgeglichen werden. Dies können die bereits erwähnten Abbildungsfehler einer Optik der LIDAR Messeinrichtung sein. Dementsprechend wird ein schlecht beleuchtetes oder ein unbeleuchtetes Sensorelement deaktiviert. Ein gut oder vollständig beleuchtetes Sensorelement wird entsprechend aktiviert. Selbiges gilt auch für Gruppen von Sensorelementen. Gegebenenfalls ist erstmalig oder in gewissen Zeitabschnitten eine Konfiguration durchzuführen, bei der entsprechende statische Fehlerquellen durch die Wahl der bestmöglichen Sensorelemente ausgeglichen werden können.

Insbesondere werden die Messwerte der Sensorelemente einer Makrozelle zur Auswertung desselben Raumwinkels verwendet. Dies ist letztlich unabhängig davon, ob der Makrozelle ein einziges oder mehrere Auswerteelemente zugewiesen sind, sofern die Messdaten bei der Auswertung gemeinsam im Hinblick auf denselben Raumwinkel verwendet werden. Beispielhaft können verschiedene Ausleseelemente mit demselben Speicherelement, welches insbesondere ein Histogramm abbildet, verbunden sein.

Ein weiterer Vorteil ist ein verringertes Signal-zu-Rausch-Verhältnis, auch Signal-to-Noise-Ratio oder SNR genannt. Insbesondere wird durch das Deaktivieren von Sensorelementen, die nicht mit Laserlicht beleuchtet werden, ein Hintergrundrauschen durch eintreffende Umgebungsstrahlung verringert.

Insbesondere ist dies vorteilhaft im Hinblick auf die Architektur einer zugehörigen Sendeeinheit. Diese umfasst mehrere Emitterelemente, die auf deren Chip einen relativ großen Abstand zueinander aufweisen. Eine zugehörige Empfangseinheit gemäß dem Stand der Technik weist in derselben räumlichen Anordnung Sensorelemente auf, wobei jedes Sensorelement ein räumlich identisch angeordnetes Emitterelement als Gegenpart hat. Zwischen den Sensorelementen verbleibt im Stand der Technik ein Freiraum, an dem ein einfallendes Laserlicht nicht detektiert werden kann. Zumeist weisen die Emitterelemente, welche beispielsweise als Vertical Cavity surface emitting laser VCSEL ausgebildet sind, einen größeren Durchmesser auf als die Sensorelemente, beispielsweise SPADs. Dementsprechend kann der Laserdurchmesser größer als die Fläche einer SPAD sein. Es ist somit sinnvoll auf der Empfangseinheit eine Vielzahl von SPAD auszubilden, sodass mehrere benachbarte SPAD gleichzeitig beleuchtet werden. Dementsprechend vorteilhaft wird auf der Empfangseinheit eine Vielzahl von Sensorelementen pro Emitterelement ausgebildet, die gemäß der vorigen und auch nachfolgenden Ausführungen zu Makrozellen zusammenwirken.

Erfindungsgemäß wird vorgeschlagen, dass jedes Sensorelement lediglich mit einem Ausleseelement verbunden ist. Jedes Ausleseelement ist andererseits mit mehreren Sensorelementen verschiedener Makrozellen verbunden, wobei diese verschiedenen Makrozellen während unterschiedlicher Messzyklen aktiv sind oder niemals zwei dieser Makrozellen gleichzeitig aktiv sind. Ferner kann, ein Ausleseelement auch mit mehreren Sensorelementen derselben Makrozelle verbunden sein.

Ein eintreffendes und von dem Sensorelement detektiertes Photon wird dadurch nur einmal in dem Histogramm abgelegt. Zudem kann ein Ausleseelement von mehreren Sensorelementen bedient werden, was eine kostengünstige und bauraumoptimierte Architektur bereitstellt. Lediglich ein aktives Sensorelement kann durch das Ausleseelement ausgelesen werden, sodass ein deaktiviertes Sensorelement, welches mit demselben Ausleseelement verbunden ist, eine Messung nicht beeinflusst. Letztlich werden alle Sensorelemente, die mit derselben Ausleseeinheit verbunden sind gleichzeitig ausgelesen, wobei aber nur ein aktives Sensorelement ein Photon detektieren kann.

Günstigerweise sind die Sensorelemente einer ersten Makrozelle mit zumindest einem ersten Ausleseelement verbunden und die Sensorelemente einer zweiten Makrozelle mit einem zweiten Ausleseelement.

Hierdurch wird eine getrennte Auswertung der einzelnen Raumwinkel bezüglich der eintreffenden Laserpulse ermöglicht. Ebenso können durch die Aktivierung der beleuchteten Sensorelemente und die Deaktivierung der unbeleuchteten Sensorelemente die zuvor erwähnten Vorteile erzielt werden. Neben dem Ausgleich von Abbildungsfehlern können auch noch andere Verfahren angewandt werden, die andere Vorteilhafte Effekte bereitstellen. Diese werden in dieser Schrift jedoch nicht erläutert.

Dabei kann jedes der Sensorelemente der Makrozelle mit demselben Ausleseelement verbunden sein. Es kann aber auch jedes Sensorelement der Makrozelle mit einem eigenen Ausleseelement verbunden sein. Oder es können zwei oder mehr Untermengen von Sensorelementen einer Makrozelle mit jeweils demselben Ausleseelement verbunden sein. Jede Untermenge ist demnach mit einem anderen Ausleseelement verbunden. Im ersten Fall ist der Makrozelle ein Ausleseelement zugewiesen, im zweiten und im dritten Fall ist der Makrozelle eine Mehrzahl von Ausleseelementen zugwiesen. Diese drei Ausführungsvarianten schließen jedoch nicht aus, dass noch weitere Sensorelemente von anderen Makrozellen, beispielsweise einer dritten Makrozelle, mit einem Ausleseelement, die bereits mit einem oder mehreren Sensorelementen der ersten Makrozelle verbunden ist, verbunden ist. Jede der drei in diesem Abschnitt genannten Varianten ist mit den Ausführungen der nachfolgenden Absätze kompatibel.

Eine Makrozelle ist aktiv, wenn eine zumindest ein Sensorelement der Makrozelle aktiviert ist. Dabei scannt ein LIDAR Messsystem zumeist seine Umgebung ab, sodass nicht alle Makrozellen der Empfangseinheit gleichzeitig aktiv sind. Vielmehr werden die Makrozellen, insbesondere Gruppen von Makrozellen, nacheinander aktiviert und wieder deaktiviert. In einem einfachen Beispiel wird bei einem rechteckigen Anordnungsmuster der Emitterelemente und der Sensorelemente ein horizontaler Scan durchgeführt, indem die Emitterelemente und Sensorelemente Spaltenweise nacheinander durchlaufen, also aktiviert und deaktiviert werden. Dies wird auch Scanning Methode genannt. Insbesondere wird dadurch eine verbesserte Richtungsauflösung erreicht, da nur die Sensorelemente oder Makrozellen der Raumwinkel aktiv sind, die auch beleuchtet werden sollen.

Die Emitterelemente senden zu Beginn des Messzyklus ein Laserlicht aus und die relevanten Sensorelemente sind für die Dauer des Messzyklus aktiv. Ein Ausleseelement kann demnach Sensorelemente verschiedener Makrozellen auslesen, mit denen dieses verbunden ist. Dieses Ausleseelement ist vorzugsweise nur mit Sensorelementen von Makrozelle verbunden, deren Makrozellen während des Scanvorgangs nicht gleichzeitig aktiv sind. In diesem einfachen Beispiel können beispielweise Sensorelementen die in derselben Zeile liegen mit demselben Ausleseelement für diese Zeile verbunden sein. Letztlich wird der Ablauf des Scanvorgangs bereits zum Teil durch die Architektur von Sensorelementen und Ausleseelementen vorgegeben bzw. die Art des Scannens ist beim Aufbau der Architektur von Empfangseinheit zu beachten.

Ein Sensorelement einer aktiven Makrozelle und ein Sensorelement einer anderen zur gleichen Zeit aktiven Makrozelle sind mit verschiedenen Ausleseelementen verbunden bzw. nicht mit demselben Ausleseelement verbunden. Mit anderen Worten sind die Sensorelemente einer ersten aktiven Makrozelle mit zumindest einem ersten Ausleseelement und die Sensorelemente einer zweiten zur gleichen Zeit aktiven Messzelle mit zumindest einem zweiten Ausleseelement verbunden, entsprechend fortfolgend für weitere aktive Messzellen. Die gleiche Zeit bedeutet hierbei innerhalb desselben Messzyklus. Ein Sensorelement einer aktiven Makrozelle und ein Sensorelement einer zur gleichen Zeit nicht aktiven Makrozelle können mit demselben Ausleseelement verbunden sein, um sich so dieses Ausleseelement zu teilen. Dadurch kann für zeitlich nacheinander aktive Makrozellen dasselbe Ausleseelement verwendet werden. Die Ausführungen dieses Abschnitts sind natürlich auch im Hinblick auf die vorigen Ausführungen zu lesen, da in einer Makrozelle jedem Sensorelement ein Ausleseelement, einer Untergruppe von Sensorelementen des Makrozelle eine Ausleseelement oder allen Sensorelementen der Makrozelle ein Ausleseelement zugeordnet sein kann.

Erfindungsgemäß wird vorgeschlagen, dass jedes Ausleseelement mit mehreren Sensorelementen verschiedener Makrozellen verbunden ist, wobei diese verschiedenen Makrozellen während unterschiedlicher Messzyklen aktiv sind oder niemals zwei dieser Makrozellen gleichzeitig aktiv sind. Also gleichzeitig während desselben Messzyklus.

Mit besonderem Vorteil ist ein Ausleseelement nur mit einem Sensorelement, mit mehreren Sensorelementen oder mit allen Sensorelementen einer einzigen aktiven Makrozelle verbunden.

Dies schließt dennoch gemäß der vorigen Ausführungen nicht aus, dass das Ausleseelement noch mit weiteren Sensorelementen inaktiver Makrozellen verbunden ist.

Die räumliche Anordnung der Sensorelemente an der Empfangseinheit ist zumeist an die räumliche Anordnung der Emitterelemente an der Sendeeinheit angelehnt. Im Stand der Technik ist die räumliche Anordnung im Wesentlichen identisch, wobei jeweils ein Emitterelement und ein Sensorelement einander zugewiesen sind. Man kann die Sensorelemente an der verbesserten Empfangseinheit im Hinblick auf den Stand der Technik im Wesentlichen in zwei Arten von Sensorelemente einteilen. Demnach sind an der Empfangseinheit erste Sensorelemente ausgebildet, die der Konfiguration der Sensorelemente gemäß dem Stand der Technik entsprechen. Dies kann beispielsweise eines oder eine Mehrzahl von Sensorelementen sein, die der räumlichen Position der Emitterelemente entsprechen. Die weiteren Sensorelemente sind zweite Sensorelemente, die in den Freiräumen zwischen den ersten Sensorelementen angeordnet sind. Günstigerweise sind diese um die ersten Sensorelemente herum verteilt angeordnet, um etwaige Ablenkungen des Laserlichts durch gezielte Aktivierung und Deaktivierung der Sensorelemente ausgleichen zu können. Die Sensorelemente sind dabei auf einer Ebene angeordnet, die im Normalfall durch einen Chip bereitgestellt wird. Die Sensorelemente bedecken dabei jedoch nur einen Teil der Oberfläche des Chips. Insbesondere sind zwischen den benachbarten Sensorelementen funktions- und auch produktionsbedingt Abstände einzuhalten. Zudem muss an dem Chip Platz für die Verschaltung oder weitere Bauteile, beispielsweise für das Ausleseelement freigehalten werden. Das Laserlicht, welches zumeist kreisförmig oder elliptisch ist deckt zumeist eine größere Fläche an dem Chip ab, als ein Sensorelement, insbesondere ein SPAD, sodass zumeist mehrere Sensorelemente durch das einfallende Laserlicht beleuchtet werden. Ein VSCEL als Emitterelement weist ebenfalls bereits eine größere Fläche auf als eine SPAD. Durch diese Anordnung lässt sich somit eine wesentliche bessere Ausnutzung des eingehenden Laserlichts zur Detektion und zur weiteren Verringerung der Umgebungsstrahlung erreichen.

Wie bereits erwähnt, werden günstigerweise ausschließlich die beleuchteten Sensorelemente aktiviert, denn lediglich von dem Laserlicht beleuchtetes Sensorelement kann sinnvolle Messdaten beisteuern. Ein Sensorelement, welches nicht durch das eintreffende Laserlicht des Emitterelements beleuchtet wird, misst lediglich Umgebungsstrahlung und verschlechtert dadurch das Signal zu Rausch Verhältnis. Günstigerweise weisen beleuchtete Sensorelemente eine Beleuchtungsfläche von zumindest 50 % auf. Das Laserlicht deckt mit Vorteil zumindest 50 % der Fläche des Sensorelements ab. Die Aktivierung von ausschließlich ausreichend beleuchteten Sensorelementen verbessert somit das Signal zu Rausch Verhältnis.

Es wird weiter vorgeschlagen, dass die Sensorelemente und / oder die Makrozellen in einem quadratischen, einem rechteckigen, diagonalen oder hexagonalen Muster angeordnet sind.

Die folgenden Ausführungen gelten für die Sensorelemente und die Makrozellen gleichermaßen. Das rechteckige Muster entspricht im Wesentlichen der Anordnung der Sensorelemente in Spalten und Zeilen, wobei die Anordnung in einem quadratischen Muster ein Spezialfall des rechteckigen Musters ist. Eine weitere Anordnungsvariante ist das hexagonale Muster, welches die größte Dichte an Sensorelementen für einen im Wesentlichen kreisförmigen Laserspot bereitstellt. Der Vorteil von rechteckigen oder quadratischen Mustern ist, dass eine große Anzahl an Sensorelementen von dem eintreffenden Laserlicht getroffen bzw. beleuchtet werden. Jedoch wird bei einem rechteckigen oder quadratischen Muster zumeist ein großer Laserlichtdurchmesser benötigt. Die Anzahl der Beleuchteten Sensorelemente ist bei Verwendung einem hexagonalen Muster geringer, beispielsweise von vier auf drei beleuchtete Sensorelemente verringert. Allerdings wird die Ausleuchtung der drei Sensorelemente auch bereits bei verringertem Laserlichtdurchmesser erzielt. Bei einem hexagonalen Muster ist bei gleichem Laserlichtdurchmesser zudem die durchschnittliche Beleuchtungsfläche der getroffenen Sensorelemente größer als bei quadratischem oder rechteckigem Muster. Bedingt ist dies durch den dem hexagonalen Muster innewohnenden höheren Füllfaktor an Sensoroberfläche im Vergleich mit einem rechteckigen oder quadratischen Muster. Ein Diagonales Muster entspricht einer besonderen Form des rechteckigen Musters. Das diagonale Muster weise einen freien Winkel auf, um den die Zeilen gekippt sind. Zudem können benachbarte Zeilen einen reihenförmigen Versatz aufweisen, der von Zeile zu Zeile identisch weitergegeben wird oder sich auch ändert.

Mit besonderem Vorteil ist der Durchmesser des eintreffenden Laserlichts günstiger Weise zumindest doppelt so groß wie der Abstand zwischen zwei Sensorelementen, insbesondere SPADs. Der Abstand ist als Wegstrecke zwischen den Mittelpunkten der Sensorelemente definiert.

Bei einer weiteren vorteilhaften Ausführungsvariante weisen benachbarte Sensorelemente einen Abstand zwischen 5 und 15 Mikrometer, insbesondere zehn Mikrometer auf.

Ein üblicher Abstand zwischen den Emitterelementen in einer Sendeeinheit beträgt beispielsweise 40 µm. Zwischen den ersten Sensorelementen ist entsprechend noch Platz für weitere zweite Sensorelemente. Dementsprechend können bei einem Abstand von ca. 10 µm in etwa drei weitere Sensorelemente, beispielsweise in Form von Reihen hinzugefügt werden. Eine Makrozelle würde in diesem Fall 4 Zeilen an Sensorelementen umfassen.

Ferner kann die LIDAR Empfangseinheit für ein LIDAR Messsystem gemäß den folgenden Ausführungen ausgebildet sein. Die Ausführungen der vorigen Absätze gelten entsprechend auch für die nachfolgend ausführlicher beschriebene bevorzugte LIDAR Empfangseinheit. Ebenso sind die nachfolgenden Ausführungen auch nicht auf die vorhergehenden Ausführungen beschränkt. Entsprechend sind auch die nachfolgenden Ausführungen auf die vorig beschriebene Empfangseinheit applizierbar.

Die LIDAR Sendeeinheit des LIDAR Messsystems weist mehrere Emitterelemente in Form von Lasern auf. Das emittierte Laserlicht der Emitterelemente wird von einem Objekt reflektiert und durch die LIDAR Empfangseinheit des LIDAR Messsystems detektiert. Die Empfangseinheit umfasst mehrere Sensorelemente. Diese Sensorelemente können gemäß den vorherigen Ausführungen ausgebildet sein. Es ist allerdings auch keine Beschränkung auf die vorherigen Ausführungen gegeben.

Die Anzahl der Sensorelemente der Empfangseinheit ist größer als die Anzahl der Emitterelemente der Sendeeinheit. Dies wurde bereits weiter oben anhand erster und zweiter Sensorelemente erläutert. Dadurch ergeben sich die bereits erläuterten Vorteile, wie beispielsweise die Möglichkeit des Ausgleichs von Abbildungsfehlern der verwendeten Sende- und Empfangsoptik.

Die Empfangseinheit ist günstigerweise in einer Focal Plane Array Anordnung ausgebildet. Demnach sind die Sensorelemente in einer Ebene angeordnet. Das Messsystem weist günstiger Weise eine Empfangsoptik sowie eine Sendeoptik auf. Die Empfangsoptik und die Empfangsoptik weisen den jeweiligen Emitterelementen und Sensorelementen die jeweiligen Raumwinkel zu. Die Sensorelemente können an der Empfangseinheit in Form dem bereits erläuterten rechteckigen, quadratischen, diagonalen oder hexagonalen Muster angeordnet sein. Auch die Anordnung der Sensorelemente in Makrozellen gemäß den vorigen Ausführungen ist hierauf anwendbar.

Insbesondere sind an der Empfangseinheit zumindest zwei Sensorelemente einer Makrozelle zugewiesen, wobei die Sensorelemente zweier Makrozellen, insbesondere zweier gleichzeitig aktiver Makrozellen, mit verschiedenen Ausleseelementen verbunden sind.

Grundsätzlich ist an dem LIDAR Messsystem auch eine Elektronik ausgebildet, die beispielsweise eine Steuerung der Emitterelemente, eine Steuerung der Sensorelemente übernimmt und auch Steuer-, Auslese-, Speicher- sowie Auswerteelemente umfassen kann. Insbesondere steuert die Elektronik die korrekte Synchronisierung er der Elemente und gewährleistet den korrekten Messbetrieb des Messsystems. Die Elektronik stellt dabei günstiger Weise auch eine weitere Verbindung zu weiteren Komponenten eines Kraftfahrzeugs her, um die ermittelten Daten zu übertragen, sodass diese weiter verarbeitet werden können. Insbesondere sind diese LIDAR Empfangseinheit und dieses LIDAR Messsystem für die Verwendung in einem Kraftfahrzeug optimiert.

Es wird weiter vorgeschlagen, dass jede Sensoreinheit einzeln aktivierbar ist. Ebenso wird vorgeschlagen, dass die Sensorelemente in Makrozellen gemäß zumindest einer der obigen Ausführungen ausgebildet sind.

Die Vorteile sind bereits weiter oben ausführlich erläutert.

Zudem ist die Anzahl der Sensorelemente mit Vorteil um ein ganzzahliges vielfaches größer als die Anzahl der Emitterelemente.

Durch die Verwendung einer Vielzahl an Sensorelementen gegenüber den Emitterelementen wird eine größere und auch variabel wählbare Detektionsfläche bereitgestellt, die durch gezieltes Aktivieren und Deaktivieren an das eintreffende Laserlicht angepasst werden kann. Das eintreffende Laserlicht wird somit bei korrekter Wahl der aktiven Sensorelemente jederzeit optimal detektiert.

Mit besonderem Vorteil sind die Sensorelemente aus ersten Sensorelementen und aus zweiten Sensorelementen ausgebildet, wobei die ersten Sensorelementen im Wesentlichen der räumlichen Anordnung der Sendeeinheit der Emitterelemente der Sendeeinheit entspricht, wobei die zweiten Sensorelemente um die ersten Sensorelemente herum verteilt sind. Insbesondere sind die zweiten Sensorelemente zwischen den ersten Sensorelementen angeordnet. Insbesondere sind die zweiten Sensorelemente kreisförmig um die ersten Sensorelemente herum angeordnet. Die Kreisförmige Anordnung kann beispielsweise durch ein hexagonales, ein rechteckiges oder ein quadratisches Muster ausgebildet sein. Auch die Ausführungen weiter oben zum Patentanspruch 1 sind entsprechend anwendbar.

Es wird weiter vorgeschlagen, dass die durch Sensorelemente einer Makrozelle abgedeckte Detektorfläche im Wesentlichen dem doppelten, dem dreifachen oder dem vierfachen der Fläche des eintreffenden Laserlicht oder der Fläche eines Emitterelements der Sendeeinheit entspricht.

Die Fläche des eintreffenden Laserlichts ist im Normalfall größer, beispielsweise aufgrund von Optikeffekten, oder gleich der Fläche des Emitterelements, wobei die Fläche eines Sensorelements im Normalfall kleiner ist als die Fläche des eintreffenden Laserlichts und auch kleiner als die Fläche eines Emitterelements. Zudem ist zwischen benachbarten Sensorelementen funktions- und auch produktionsbedingt ein Abstand ausgebildet, auch Zwischenraum genannt. Das an der Empfängereinheit eintreffende Laserlicht überdeckt somit im Normalfall mehrere Sensorelemente inkl. derer Zwischenräume. Die Sensorelemente sind daher derart gewählt, dass diese inkl. derer Zwischenräume ein Vielfaches der Fläche des eintreffenden Laserlichts abdecken. Die von den Sensorelementen mit Zwischenelementen abgedeckte Fläche wird im Weiteren auch Detektorfläche gekannt. Mit besonderem Vorteil ist die Detektorfläche zumindest vier Mal so groß, insbesondere fünf Mal so groß, wie die auf das Empfangselement projizierte Fläche des eintreffenden Lasers. Der Faktor 4 entspricht im Wesentlichen den zu erwartenden Abweichungen des eintreffenden Laserlichts gegenüber den ersten Sensorelementen. Die Detektorfläche ist vorteilhafterweise zwei bis fünf Mal so groß wie die Fläche des eintreffenden Laserlichts. Die Detektorfläche wird dabei günstigerweise durch die Sensorelemente einer einzigen Makrozelle ausgebildet.

Günstiger Weise entspricht der Durchmesser der Detektorfläche der Sensorelemente einer Makrozelle zumindest dem Doppelten eines Laserlichtdurchmessers oder eines Durchmessers eines Emitterelements.

Das Laserlicht kann beispielsweise auch einen elliptischen Querschnitt aufweisen. Zudem können die Emitterelemente auch eine Rechteckform aufweisen. In diesen Fällen ist der Durchmesser durch die längste durch den Mittelpunkt verlaufende Strecke oder eine Diagonale definiert.

Die Ausführungen zu dem Flächenverhältnis zwischen Detektorfläche und Fläche des eintreffenden Laserlichts bzw. der Fläche des Emitterelements treffen auch hierauf zu und sind sinngemäß zu übernehmen.

Ferner kann die LIDAR Empfangseinheit eines LIDAR Messsystems gemäß den folgenden Ausführungen ausgebildet sein.

Die Ausführungen der vorigen Absätze zu der LIDAR Empfangseinheit und zu dem LIDAR Messsystem gelten entsprechend auch für die nachfolgend ausführlicher beschriebene ferner bevorzugte LIDAR Empfangseinheit. Ebenso sind die nachfolgenden Ausführungen auch nicht auf die vorhergehenden Ausführungen beschränkt.

Letztlich stellen alle diese verschiedenen LIDAR Empfangseinheiten unterschiedliche Sichtweisen auf dieselbe Idee dar. Die LIDAR-Empfangseinheit umfasst mehrere Sensorelemente. Diese können gemäß obigen Erläuterungen ausgebildet sein. Die Sensorelemente werden in erste Sensorelemente und in zweite Sensorelemente unterteilt. Die ersten Sensorelemente sind in einer Ebene der Empfangseinheit im Wesentlichen in derselben räumlichen Konfiguration angeordnet wie die Emitterelemente der Sendeeinheit.

Die Anordnung der ersten und zweiten Sensorelemente wird nun nochmals anschaulich beschrieben. Die Sendeeinheit mit dessen Emitterelementen wird gedanklich kopiert, die nun die Empfangseinheit ausbildet. Entsprechend sind die Emitterelemente durch Sensorelemente ausgetauscht. Dies sind die ersten Sensorelemente. Dabei ist die räumliche Konfiguration der ersten Sensorelemente mit der räumlichen Konfiguration der Emitterelemente ähnlich, aber nicht zwingend identisch. Insbesondere können kleine Versatze oder Verschiebungen auftreten. Dies kann beispielsweise dadurch bedingt sein, dass durch die Mehrzahl an Sensorelementen und die Anordnung in einem hexagonalen Muster für die Empfangseinheit einem Quader- oder Rechteckmusters der Sendeeinheit gegenübersteht. Die Anzahl der ersten Sensorelemente ist demnach identisch mit der Anzahl der Emitterelemente. Die weiteren Sensorelemente, welche die zweiten Sensorelemente darstellen, sind in den Freiräumen zwischen den ersten Sensorelementen angeordnet oder um die ersten Sensorelemente herum angeordnet. Dadurch wird die mögliche Fläche zur Detektion durch Sensorelemente vergrößert und etwaige Abbildungsfehler durch Optiken oder sonstige Effekte können ausgeglichen werden.

Die LIDAR Sendeeinheit des LIDAR Messsystems weist mehrere Emitterelemente in Form von Lasern auf. Das emittierte Laserlicht der Emitterelemente wird von einem Objekt reflektiert und durch die LIDAR Empfangseinheit des LIDAR Messsystems detektiert. Die Empfangseinheit umfasst mehrere Sensorelemente. Diese Sensorelemente können gemäß den vorherigen Ausführungen ausgebildet sein. Es ist allerdings auch keine Beschränkung auf die vorherigen Ausführungen gegeben.

Die Anzahl der Sensorelemente der Empfangseinheit in Form von ersten und zweiten Sensorelementen ist größer als die Anzahl der Emitterelemente der Sendeeinheit.

Die Empfangseinheit ist günstigerweise in einer Focal Plane Array Anordnung ausgebildet. Demnach sind die Sensorelemente sind in einer Ebene angeordnet. Das Messsystem weist dabei günstiger Weise eine Empfangsoptik sowie eine Senderoptik auf. Die Empfangsoptik und die Empfangsoptik weisen den jeweiligen Emitterelementen und Sensorelementen die jeweiligen Raumwinkel zu. Die Sensorelemente können an der Empfangseinheit in Form der bereits erläuterten rechteckigen oder quadratischen sowie hexagonalen Muster angeordnet sein. Auch die Anordnung der Sensorelemente in Makrozellen gemäß den vorigen Ausführungen ist hierauf anwendbar.

Insbesondere sind an der Empfangseinheit zumindest zwei Sensorelemente einer Makrozelle zugewiesen, wobei die Sensorelemente zweier Makrozellen, insbesondere zweier gleichzeitig aktiver Makrozellen, mit verschiedenen Ausleseelementen verbunden sind.

Grundsätzlich ist an dem LIDAR Messsystem auch eine Elektronik ausgebildet, die beispielsweise eine Steuerung der Emitterelemente, eine Steuerung der Sensorelemente übernimmt und auch Steuer-, Auslese-, Speicher- sowie Auswerteelemente umfassen kann. Insbesondere steuert die Elektronik die korrekte Synchronisierung er der Elemente und gewährleistet den korrekten Messbetrieb des Messsystems. Die Elektronik stellt dabei günstiger Weise auch eine weitere Verbindung zu weiteren Komponenten eines Kraftfahrzeugs her, um die ermittelten Daten zu übertragen, sodass diese weiter verarbeitet werden können. Insbesondere ist diese LIDAR-Empfangseinheit und dieses LIDAR-Messsystem für die Verwendung in einem Kraftfahrzeug optimiert.

Mit Vorteil ist jedes Sensorelement einzeln aktivierbar. Entsprechend sind hier die obigen Ausführungen zur einzelnen oder gruppenweisen Aktivierbarkeit und Deaktivierbarkeit anwendbar. Zudem ist die Anordnung in einer Makrozelle gemäß zumindest einer der obigen Ausführungen von besonderem Vorteil.

Es wird weiter vorgeschlagen, dass die durch Sensorelemente einer Makrozelle abgedeckte Detektorfläche im Wesentlichen dem doppelten, dem dreifachen oder dem vierfachen der Fläche des eintreffenden Laserlicht oder der Fläche eines Emitterelements der Sendeeinheit entspricht.

Die Fläche des eintreffenden Laserlichts ist im Normalfall kleiner oder gleich der Fläche des Emitterelements, wobei die Fläche eines Sensorelements im Normalfall nochmals kleiner ist als die Fläche des eintreffenden Laserlichts sowie der Fläche der Emitterelemente. Zudem ist zwischen benachbarten Sensorelementen funktions- und auch produktionsbedingt ein Abstand ausgebildet, auch Zwischenraum genannt. Das an der Empfängereinheit eintreffende Laserlicht überdeckt somit im Normalfall mehrere Sensorelemente inkl. derer Zwischenräume. Die Sensorelemente sind daher derart gewählt, dass diese inkl. derer Zwischenräume ein Vielfaches der Fläche des eintreffenden Laserlichts abdecken. Die von den Sensorelementen mit Zwischenelementen abgedeckte Fläche wird im Weiteren auch Detektorfläche gekannt. Mit besonderem Vorteil ist die Detektorfläche zumindest vier Mal so groß, insbesondere fünf Mal so groß, wie die auf das Empfangselement projizierte Fläche des eintreffenden Lasers. Der Faktor 4 entspricht im Wesentlichen den zu erwartenden Abweichungen des eintreffenden Laserlichts gegenüber den ersten Sensorelementen. Die Detektorfläche ist vorteilhafterweise zwei bis fünf Mal so groß wie die Fläche des eintreffenden Laserlichts. Die Detektorfläche wird dabei günstigerweise durch die Sensorelemente einer einzigen Makrozelle ausgebildet.

Günstiger Weise entspricht der Durchmesser der Detektorfläche der Sensorelemente einer Makrozelle zumindest dem Doppelten eines Laserlichtdurchmessers oder eines Durchmessers eines Emitterelements.

Das Laserlicht kann beispielsweise auch einen elliptischen Querschnitt aufweisen. Zudem können die Emitterelemente auch eine Rechteckform aufweisen. In diesen Fällen ist der Durchmesser durch die längste durch den Mittelpunkt verlaufende Strecke oder eine Diagonale definiert.

Die Ausführungen zu dem Flächenverhältnis zwischen Detektorfläche und Fläche des eintreffenden Laserlichts bzw. der Fläche des Emitterelements treffen auch hierauf zu und sind sinngemäß zu übernehmen.

Mit Vorteil weist das erste Sensorelement und die zweiten Sensorelemente einer Makrozelle eine Detektorfläche auf, die zumindest dem doppelten, dem dreifachen oder dem vierfachen der Fläche des eintreffenden Laserlichts des zugehörigen Emitterelements der Sendeeinheit entspricht.

Günstigerweise entspricht ein Durchmesser einer Detektorfläche des ersten Sensorelements und der zweiten Sensorelemente einer Makrozelle zumindest dem doppelten Durchmesser des eintreffenden Laserlichts oder der Fläche des zugehörigen Emitterelements der Sendeeinheit.

Insbesondere sind an der Empfangseinheit zumindest zwei Sensorelemente einer Makrozelle zugewiesen, wobei die Sensorelemente zweier Makrozellen, insbesondere zweier gleichzeitig aktiver Makrozellen, mit verschiedenen Ausleseelementen verbunden sind.

Es wird weiter vorgeschlagen, dass die Makrozellen ebenfalls in Zeilen und Spalten angeordnet sind. Auch hier ist eine Quadratische, eine Rechteckige, eine diagonale oder eine hexagonale Anordnung möglich.

Dabei kann eine Markozelle von einer benachbarten beabstandet sein oder ohne Abstand neben der benachbarten Markozelle angeordnet sein. Eine Makrozelle kann dabei einen beabstandeten Nachbarn und zugleich auch einen Nachbarn ohne Abstand haben. Insbesondere können auch alle Nachbarn einer Makrozelle beabstandet sein oder keinen Abstand aufweisen.

Günstigerweise ist zwischen reihenweise benachbarten Makrozellen ein Abstand ausgebildet, wobei zwischen zeilenweise Nachbarn ohne Abstand angeordnet sind. Beispielsweise können auch Gruppen von Makrozellen ausgebildet sein, wobei die Gruppen zueinander beabstandet sind, die Markozellen in der Gruppe jedoch keinen Abstand zur benachbarten Markozelle aufweisen. In einem Beispiel können an der Sensoreinheit Gruppen mit je zwei Makrozellen ausgebildet sein, wobei die reihenweise und zeilenweise benachbarten Gruppen mit deren Markozellen einen Abstand aufweisen.

In diesen zwischen Zwischenräumen können beispielsweise Elektronikkomponenten angeordnet sein, wie beispielsweise TDCs.

Die Erfindung wird beispielhaft an mehreren Ausführungsvarianten anhand der folgenden Figuren nochmals detaillierter erläutert. Es zeigen:
- Fig. 1: eine schematische Darstellung einer LIDAR Empfangseinheit und einer LIDAR Sendeeinheit;
- Fig. 2: einen schematischen Aufbau eines LIDAR-Messsystems;
- Fig. 3: verschiedene Varianten der Überlagerung eines Laserlichts eines Emitterelements auf einem Sensorelement einer Empfangseinheit;
- Fig. 4a, b: eine schematische Darstellung der Anordnung von Sensorelementen in einem quadratischen Muster;
- Fig. 5a, b, c: eine schematische Darstellung einer Anordnung von Sensorelementen in einem hexagonalen Muster;
- Fig. 6: eine weitere schematische Darstellung einer Anordnung von Sensorelementen in einem hexagonalen Muster;
- Fig. 7: Anordnung von Sensorelementen auf einem Chip in einem hexagonalen Muster;
- Fig. 8: eine weitere Anordnung von Sensorelementen auf einen Chip in einer hexagonalen Anordnung.

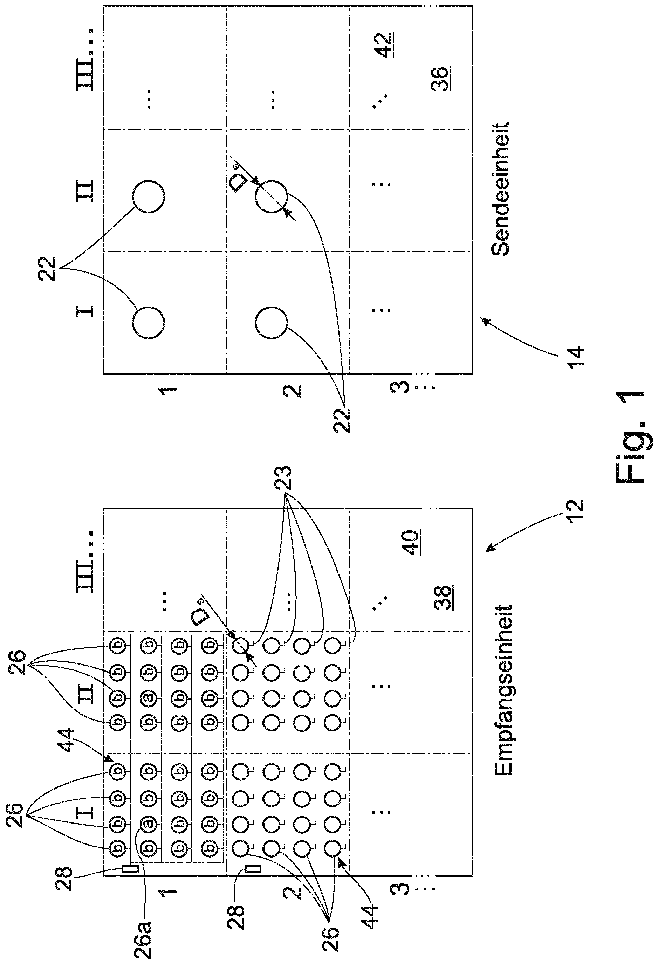

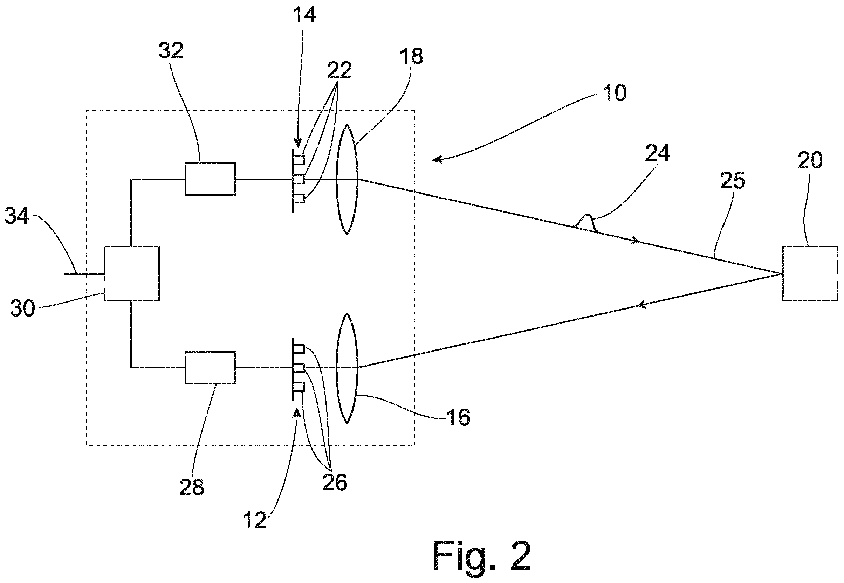

In der Fig. 1 ist eine LIDAR Empfangseinheit 12 sowie eine LIDAR-Sendeeinheit 14 für ein LIDAR Messsystem 10 dargestellt. Eine solche Empfangseinheit 12 und eine solche Sendeeinheit 14 sind in der Fig. 2 nochmals innerhalb des LIDAR-Messsystems 10 dargestellt. Dabei umfasst das LIDAR-Messsystem zudem eine Empfangsoptik 16 sowie eine Senderoptik 18. Dieses LIDAR Messsystem 10 ist zur statischen Montage an einem Kraftfahrzeug vorgesehen, um eine Umgebung zu betrachten und einen Abstand von einem Objekt 20 zu dem Kraftfahrzeug zu ermitteln. Ein solches Messsystem kann beispielsweise für autonomes Fahren verwendet werden. Das Funktionsprinzip ist wie folgt.

Die LIDAR Sendeeinheit 14 weist Emitterelemente 22 auf, wobei diese Lichtpulse emittieren. Diese Emitterelemente 22 können beispielsweise durch einen bzw. mehrere Vertical Cavity surface emitting laser, in Kurzform VCSEL, ausgebildet sein. Ein von einem Emitterelement 22 ausgesendeter Puls 24 durchläuft die Senderoptik 18, wird an einem Objekt 20 reflektiert und über eine Empfangsoptik 16 auf eines von mehreren Sensorelementen 26 geleitet wird. Ein solches Sensorelement kann beispielsweise durch eine Single Photon Avalanche Diode, auch SPAD genannt, ausgebildet sein.

In der Fig. 2 ist zur einfachen Darstellung jeweils nur ein Strahl 25 dargestellt, der den Verlauf des Pulses 24 verdeutlichen soll. Mit Hilfe der Optiken 16 und 18 und der Vielzahl an Emitterelementen 22 und Sensorelementen 26 kann durch das Messsystem 10 ein Raum auf Objekte abgetastet werden. Durch die entsprechenden Optiken 16 und 18 ist letztlich jedem Emitterelement 22 und jedem Sensorelement 26 ein bestimmter Raumwinkel zugeordnet. Ein von einem 26 detektierter Lichtpuls 24 wird von einem Ausleseelement 28 ausgelesen und an eine Auswerteeinheit 30 weitergegeben, welche unter anderem ein Speicherelement aufweist. Dabei wird zur Bestimmung des Abstands des Objekts 20 von dem Kraftfahrzeug das Time of Flight Prinzip, auch TOF genannt, angewendet. Der ausgesendete Puls wird mit der verstrichenen Zeit des bis zum Eintreffen an der Empfangseinheit 12 verknüpft, woraus die Laufstrecke des Lichtpulses 24 ermittelt werden kann. Eine entsprechende Koordination der ablaufenden Prozesse ist durch die Steuereinheit 32 realisiert. Das Ausleseelement in dieser Ausführungsvariante durch einen Time to Digital Converter, TDC, ausgebildet, der ein Speicherelement, welches ein Histogramm abbildet, befüllt. Diese Ausführungen sind jedoch sehr grundlegend und sollen nur das allgemeine Prinzip verdeutlichen. Diese Ausführungsvariante ist auf keinen Fall beschränkend für den elektronischen Aufbau des Messsystems. Um den Rahmen dieser Schrift nicht zu sprengen, können auch nicht alle Wechselwirkungen zwischen diesen Elektronikkomponenten und deren konkreter Aufbau dargestellt werden. Das LIDAR-Messsystem ist dabei mit weiteren Komponenten des Kraftfahrzeugs über eine Verbindung 34 verbunden, über die die entsprechenden Daten übermittelt werden können.

In der Fig. 1 ist dabei der Aufbau der Sendeeinheit 14 und der Empfangseinheit nochmals detaillierter in einer schematischen Darstellung gezeigt. Die Sendeeinheit weist dabei mehrere Emitterelemente 22 auf, die hier als VCSEL ausgebildet sind. Dabei sind lediglich vier Emitterelemente 22 gezeigt, wobei der Chip um ein Vielfaches mehr an Emitterelementen aufnehmen kann. Die Emitterelemente sind dabei in einem rechteckförmigen Muster auf der Ebene der Sendeeinheit 14 angeordnet. Diese Anordnung in Spalten und Zeilenform ist beispielhaft gewählt. Die Anordnung kann beispielsweise auch in einem hexagonalen Muster oder in jeder anderen Form auf der Ebene verwirklicht sein. Die Sendeeinheit ist dabei als Focal Plane Array ausgeführt. Demnach sind die Emitterelemente 22 auf einer Ebene 36 angeordnet, hierbei auf einem Chip 42, der die Ebene 36 ausbildet. Die Ebene 36 des LIDAR Messsystem 10 ist in dem Brennpunkt der Senderoptik 18 angeordnet ist. Insbesondere sind die Emitterelemente 22 in der Brennebene der Senderoptik 18 angeordnet.

Die Empfangseinheit 12 weist mehrere Sensorelemente 26 auf, wobei der Übersichtlichkeit halber lediglich einige Sensorelemente 26 in der Figur mit Bezugszeichen versehen sind. Diese Senderelemente, in diesem Fall SPAD 26, sind ebenfalls in einer Ebene 38 angeordnet, welche durch den Chip 40 bereitgestellt wird. Diese Ebene 38, insbesondere die Sensorelemente 26, ist an dem LIDAR-Messsystem 10 ebenso als Focal Plane Array in der Brennebene der Empfangsoptik 16 angeordnet. Die Anzahl der Sensorelemente 26 ist wesentlich größer als die Anzahl der Emitterelemente 22. In dieser Ausführungsvariante kommt auf ein Emitterelement 22 eine Anzahl von 16 Sensorelementen 26. Dabei ist ein erstes Sensorelement 26a jeweils der räumlichen Konfiguration eines Emitterelements 22 der Sendeeinheit 14 zugeordnet. Mit anderen Worten stellt die Empfangseinheit 12 eine Kopie der Sendeeinheit dar, wobei die Emitterelemente 22 durch erste Sensorelemente 26a ausgetauscht sind. Vergleicht man die Emitterelemente mit den Sensorelementen, so stellt man fest, dass die VCSEL im Durchmesser größer sind als die SPAD. Die Emitterelemente 22 weisen einen Durchmesser De und die Sensorelemente 26 einen Durchmesser Ds auf. Dennoch ist auf der Sendeeinheit ein Freiraum zwischen den benachbarten Emitterelementen 22 vorhanden.

Dieser Freiraum wird an der Empfangseinheit 12 durch weitere Sensorelemente 26 aufgefüllt, die im Weiteren als zweite Sensorelemente 26b bezeichnet werden. Das Bezugszeichen 26b ist der Übersichtlichkeit halber als einfaches "b" innerhalb der Darstellung der Sensorelemente 26 dargestellt und dies auch lediglich für die oberste Zeile. Die Bezugszeichen der ersten Zeile gelten entsprechend stellvertretend für die weiteren Zeilen und auch Spalten. Diese zweiten Sensorelemente 26b sind in den Zwischenräumen zwischen den ersten Sensorelementen 26a angeordnet. Die zweiten Sensorelemente 26b sind im Wesentlichen um das erste Sensorelement 26 a herum angeordnet.

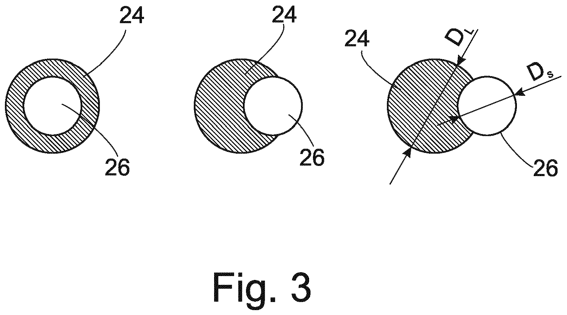

Durch die Verwendung einer Mehrzahl an Sensorelementen 26 gegenüber der Anzahl der Emitterelementen 22, können Abbildungsfehler der Optiken 16 und 18 oder sonstige Einflüsse ausgeglichen werden. Dabei weist ein Emitterelement 22 eine größere Fläche auf, als ein Sensorelement 26. Dies bedeutet, dass einige der Sensorelemente 26 an der Empfangseinheit 12 vollständig, andere lediglich teilweise und weitere gar nicht von einem eingehenden Laserlicht getroffen werden. Dies ist für ein einzelnes Sensorelement beispielhaft in der Fig. 3 dargestellt. Dabei ist in der linken Darstellung eine vollständige Überlagerung des Laserlichts 24 mit dem Sensorelement 26 gezeigt, in der mittleren Darstellung eine teilweise Überlagerung und in der rechten Darstellung eine geringe Überlagerung gezeigt. Der Durchmesser DI des Laserlichts 24 gegenüber der Fläche des Sensorelements 26 ist lediglich schematisch dargestellt. Im Normalfall der Durchmesser DI des Laserlichts 24 so groß, dass sogar eine Mehrzahl an Sensorelementen 26 mit eintreffendem Licht bedeckt sein kann.

Die Sensorelemente 26 sind dabei in Makrozellen 44 angeordnet. Jede Makrozelle ist an der Empfangseinheit 12 beispielhaft durch eine Strichlinierung von einer räumlich benachbarten Makrozelle 44 abgetrennt. Jedes Emitterelement 22 ist einer solchen Makrozelle 44 zugeordnet. Die entsprechende Aufteilung ist ebenfalls durch Strichlinierung an der Sendeeinheit 14 beispielhaft dargestellt. Die Makrozellen sind dabei über römische Ziffern I, II, III, IV, V, usw. in Spalten und über arabische Ziffern, 1, 2, 3, 4, 5, usw. in Zeilen unterteilt. Eine Sendeeinheit 14 und eine Empfangseinheit 12 können dabei mehr als 200 Zeilen und Spalten aufweisen.

Dabei weist jede Makrozelle zumindest ein erstes Sensorelement 26a auf und zumindest ein zweites Sensorelement 26b. Diese in der Makrozelle zusammengefassten Sensorelemente 26 sind mit einem Ausleseelement 28 verbunden. Das Ausleseelement detektiert ein an einem Sensorelement 26 eingehendes Photon und leitet dies weiter an eine Auswerteeinheit, insbesondere an eine Speichereinheit. Der weitere Ablauf bei der Verarbeitung der detektierten Photonen wird hier nicht erläutert.

Man erkennt, dass das Ausleseelement mit allen Sensorelementen 26 der Makrozelle 44 verbunden ist. Die Sensorelemente sind dabei alle jeweils einzeln aktivierbar. Dies ist durch eine an der SPAD anlegbare Vorspannung ermöglicht. Überschreitet die Vorspannung einen bestimmten Wert, so ist die SPAD aktiv. Ein entsprechendes Absenken unter diesen Wert deaktiviert die SPAD. Die Spannung wird dabei durch die Steuereinheit vorgegeben, die mit jeder der SPAD verschaltet ist. Die Verschaltung ist beispielhaft durch Leitungen 23 dargestellt. Diese der Übersichtlichkeit halber nur in Zeile 2 der Empfangseinheit ausgebildet. Entsprechend sind auch nur ein Teil der Bezugszeichen 23 in der Fig. 1 eingezeichnet. Jedes Sensorelement 26 kann unabhängig von den anderen Sensorelementen 26 aktiviert und deaktiviert werden.

Es werden somit lediglich die Sensorelemente 26 aktiviert, die von dem Laserlicht 24 auch beleuchtet werden. Dadurch wird ein durch die Umgebungsstrahlung bedingtes Hintergrundrauschen verringert, denn lediglich durch das Laserlicht 24 beleuchtetes Sensorelement kann sinnvolle Messwerte liefern. Zudem sind durch gezielte Auswahl der aktiven Sensorelemente 26 Abbildungsfehler der Optiken korrigierbar. Zudem können auch andere Effekte, die zu einer Verschiebung des Laserstrahls 24 gegenüber dem ersten Sensorelement 26a führen, ausgeglichen werden.

Die Sensorelemente 26 können zur Aktivierung und Deaktivierung auch in Gruppen zusammengefasst werden, sodass diese Gruppen gleichzeitig aktiviert und deaktiviert werden können. Dies können beispielsweise Untermengen von Sensorelementen 26 einer Makrozelle 44 oder alle Sensorelemente 26 einer Makrozelle 44 sein.

Das Ausleseelement 28 ist an der Empfangseinheit 12 in Fig. 1 in jeder Zeile von Makrozellen 44 ausgebildet und mit allen Sensorelementen 26 dieser jeweiligen Zeile verbunden. Diese Anordnung ist jedoch nur beispielhaft. Grundsätzlich kann jedes Sensorelement sein eigenes Ausleseelement aufweisen. Besonders vorteilhaft weist jede Zeile von Sensorelementen ein Ausleseelement auf. Beispielhaft können auch zwei benachbarte Zeilen gemeinsam ein Ausleseelement 28 aufweisen, wobei entsprechend jedes Sensorelement 26 der Zeile mit diesem Ausleseelement 28 verbunden ist. Das Sensorelement 28 ist zudem mit mehreren Sensorelementen 26 verschiedener Makrozellen 44 einer Zeile verbunden.

Beispielhaft wird bei dieser Ausbildung der Empfangseinheit ein horizontaler Scanvorgang durchlaufen. Alternativ sind auch vertikale oder diagonal verlaufende Scanvorgänge, sowie andere Abläufe, wie rotierend oder auch zufällig Scanvorgänge möglich. Dabei wird zunächst von den Emitterelementen der Spalte I ein Laserlicht 24 ausgesendet und zeitgleich die gewünschten Sensorelemente 26 de Spalte I aktiviert. Die Ausleseelemente 28 können eintreffendes Laserlicht 24 verarbeiten. Mit dem Ablauf der Zeitdauer eines Messzyklus werden die Sensorelemente der Spalte I deaktiviert und derselbe Vorgang beginnt für die Spalte II, usw.. Da die Ausleseeinheit 28 lediglich Messdaten von aktivierten Sensorelementen 26 bzw. aktiven Makrozellen 44 auslesen kann, ist es möglich eine einzige Ausleseeinheit 28 für eine Vielzahl von nacheinander aktiven Makrozellen 44 oder Sensorelementen 26 zu verwenden. Diese Anordnung und Ablaufbeschreibung ist jedoch lediglich beispielhaft, wobei ein Vielzahl an Anordnungsmöglichkeiten und Scanvarianten für die Empfangseinheit möglich sind.

Die Sensorelemente der gleichzeitig aktiven Makrozellen in einem ersten Messzyklus bei Spalte I sind dabei makrozellenweise mit unterschiedlichen Ausleseelementen 28 verbunden. Dennoch besteht eine gleichzeitige Verbindung von Sensorelementen 26 mit einem Ausleseelement 28 in Makrozellen 44, die nicht gleichzeitig aktiv sind, also hierbei zeilenweise benachbart sind.

In der Fig. 1 ist ersichtlich zudem, dass zwischen den Sensorelementen 26 von zwei vertikal benachbarten Makrozellen 44 im Wesentlichen kein Abstand ausgebildet ist, wobei zwischen zwei horizontal benachbarten Makrozellen 44 ein Abstand ausgebildet ist. Dieser Abstand stellt Bauraum für die Anordnung von weiteren Elektronickomponenten bereit. Zwischen den Sensorelementen der Spalte I und der Spalte II ist ein Abstand ausgebildet. Zwischen den Sensorelementen der Reihe 1 und der Reihe 2 ist kein Abstand ausgebildet. Der Abstand einer Makrozelle ergibt sich entsprechend dem Abstand der Sensorelemente dieser Makrozellen.

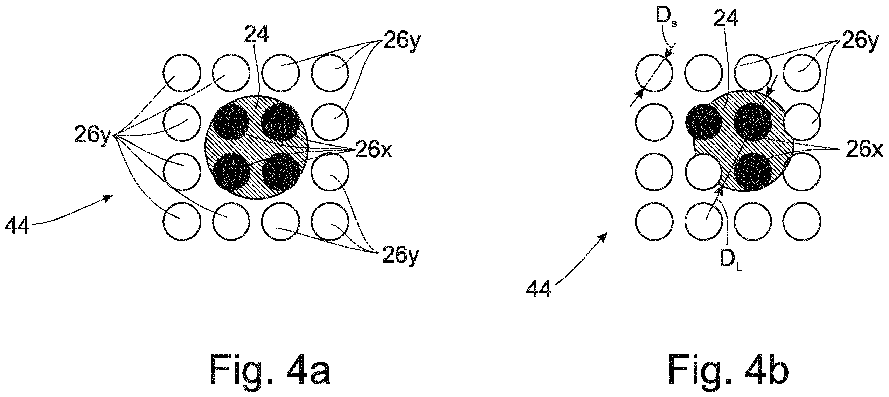

In den Fig. 4 ist beispielhaft eine quadratische Anordnung von Sensorelementen 26 dargestellt. Dabei trifft das Laserlicht in Fig. 4a, welches durch den Kreis mit dem Bezugszeichen 24 verdeutlicht ist, in das Zentrum einer Makrozelle 44. Das kreisförmig eintreffende Laserlicht weist dabei einen Durchmesser DI auf, so dass in diesem Fall vier kreisförmige Sensorelemente 26 von dem Laserlicht bedeckt sind. Dies stellt den theoretischen Treffpunt des Laserlichts auf der Empfangseinheit 12 dar, wen das Licht an einem Objekt im unendlichen reflektiert wird. Dabei sind die vier dunkel schraffierten bzw. ausgefüllten Sensorelemente 26x aktiviert und die als unausgefüllte Kreise 26y dargestellten Sensorelemente 26 deaktiviert. Die aktivierten Sensorelemente 26 x sind im Gegensatz zu den nicht aktivierte Sensorelementen 26 y nahezu vollständig mit Laserlicht bedeckt, so dass ein optimales Signal zu Rauschverhältnis erreicht wird. Würde man die deaktivierten Sensorelemente 26 y ebenfalls aktivieren, so würde sich lediglich das Signal zu Rauschverhältnisse verschlechtern.

In Fig. 4b ist dieselbe Konfiguration wie in Fig. 4a dargestellt. Das Laserlicht trifft aufgrund eines beispielhaften Abbildungsfehlers der Empfangsoptik versetzt an der Empfangseinheit auf. Das eintreffende Laserlicht 24 ist somit gegenüber der Fig. 4a verschoben. Anstelle der vier beleuchteten Sensorelemente 26 sind lediglich noch zwei Sensorelemente 26x vollständig beleuchtet und eines drittes Sensorelement 26x zumindest zum Großteil. Eines der zuvor aktiven Sensorelemente 26 wurde deaktiviert, um ein optimales Signal zu Rauschverhältnisse zu behalten. Etwaige Abbildungsfehler der Optiken können dabei von Makrozelle zu Makrozelle unterschiedlich sein und durch die Aktivierung der korrekten Sensorelemente 26 ausgeglichen werden.

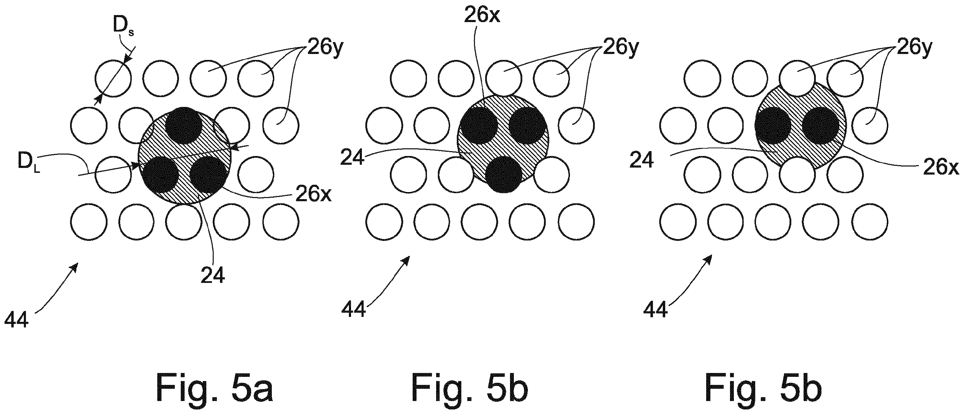

In einer weiteren in den Fig. 5 gezeigten Variante wird ein hexagonales Muster für die Sensorelemente 26 verwendet. Durch das hexagonale Muster bzw. die hexagonale Anordnung der Sensorelemente 26 wird eine höhere Fülldichte erreicht, aber andererseits die Anzahl der aktiven Sensorelemente 26x auf 3 verringert. Dabei ist allerdings der Durchmesser DI des Laserstrahls bereits kleiner als in den Ausführungen zu den Fig. 4. Dabei zeigt Fig. 5a die optimale, theoretisch perfekte Beleuchtung von drei Sensorelementen, die Fig. 5b eine geringe Verschiebung durch Abbildungsfehler, sodass ein Sensorelement vollständig und die anderen beiden aktiven Sensorelemente zumindest zu einem Großteil beleuchtet sind. Die Fig. 5c zeigt eine schlechte Beleuchtung in dieser Systemvariante, in der zwei aktive Sensorelemente 26x vollständig durch das Laserlicht 24 beleuchtet sind und zwei deaktivierte Sensorelemente lediglich etwa die Hälfte beleuchtet sind.

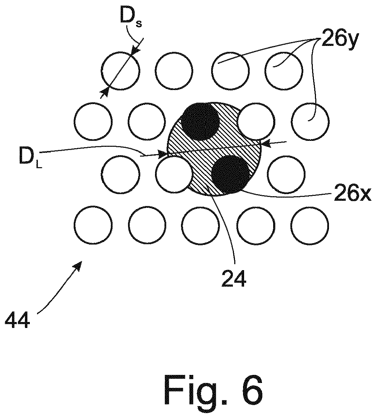

Des Weiteren ist in der Fig. 6 eine weitere Variante mit hexagonalem Muster gezeigt, bei der der Laser der Durchmesser DI des Laserlichts gegenüber den Ausführungen in Fig. 4 und 5 nochmals verkleinert ist. Dabei ergibt sich, dass immer eines oder zwei Sensorelemente 26x ausreichend beleuchtet sind und demnach aktiv sind.

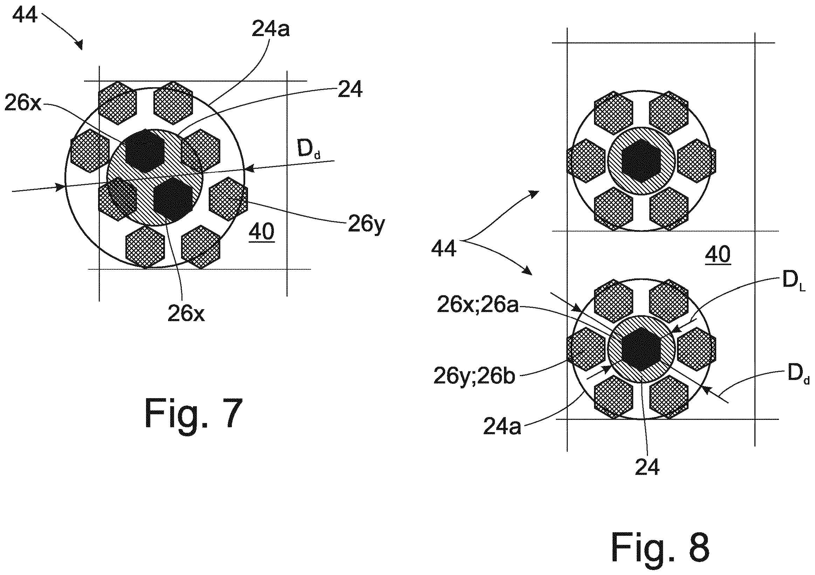

Die Fig. 7 zeigt ein weiteres praktisches Beispiel in schematischer Darstellung mit im Wesentlichen hexagonalförmigen Sensorelementen 26, die in einem Hexagonalmuster angeordnet sind. Dabei ist ein Chip 40 mit den Sensorelementen 26 und dem eintreffenden Laserlicht gezeigt. In der optimalen Position des eintreffenden Laserlichts 24 sind zwei Sensorelemente 26x aktiviert und günstiger Weise nahezu vollständig ausgeleuchtet. Eine vermeintlich maximal zu erwartende Abweichung des Laserlichts durch den Kreis mit der Bezugsziffer 24a eingezeichnet, in dessen Rahmen das Laserlicht an er Makrozelle 44 eintreffen kann. Man erkennt, dass die deaktivierten Sensorelemente 26y um die aktivierten Sensorelemente 26 x herum angeordnet sind, wobei die aktivierten Sensorelemente 26 x in diesem Fall erste Sensorelemente 26a und die deaktivierten Sensorelemente 26y zweite Sensorelemente 26b darstellen. Die Sensorelemente 26 und deren Zwischenräume bilden eine Detektorfläche, und decken damit im Wesentlichen die Fläche des Laserlichts inklusive einer möglichen Ablenkung durch Störeffekte ab. Ein Durchmesser Dd der Detektorfläche entspricht in diesem Beispiel im Wesentlichen dem Doppelten des Durchmessers DI des Laserlichts 24, wobei die Detektorfläche zentrisch zum optimalen Treffpunkt des Laserlichts angeordnet ist oder zentrisch um die ersten Sensorelemente 26a herum angeordnet ist. Die Fläche des Kreises 24a, die auch im Wesentlichen der Detektorfläche entspricht ist in etwa vier Mal so groß ist wie die Fläche des Laserlichts 24. Die Detektorfläche weist im Allgemeinen einen Durchmesser Dd in Höhe von zumindest dem 1,2-; 1,4-; 1,6-; 1,8- oder dem 2-fachen des Durchmessers DI des Laserlichts auf. Entsprechend weist die Detektorfläche im Wesentlichen zumindest die 1,5-; 2-; 3- oder 4-fache Fläche des eintreffenden Laserlichts auf.

Entsprechende Verhältnisse für die Flächen sowie auch für die Durchmesser gelten entsprechend auch für die vorigen Ausführungsbeispiele, insbesondere für die Figuren 4 bis 6.

In der Fig. 8 ist dabei nochmals eine weitere Variante gezeigt, bei der gegenüber der Fig. 7 ein nochmals kleinerer Laserstrahl verwendet wird und die Anordnung der Sensorelemente eine Hexagonalform aufweist. In diesem Fall ist auf dem Chip 40 ebenfalls ein horizontaler sowie ein vertikaler Abstand zwischen den Sensorelementen 26 zweier Makrozellen 44 vorhanden. Dies schafft zusätzlichen Platz für weitere Elektronik. Die weitere Ausgestaltung entspricht im Wesentlichen den obigen Ausführungen der Figurenbeschreibung.

### Bezugszeichen

- 10: LIDAR Messsystem
- 12: LIDAR Empfangseinheit
- 14: LIDAR Sendeeinheit
- 16: Empfangsoptik
- 18: Senderoptik
- 20: Objekt
- 22: Emitterelement, VCSEL
- 23: Leitung
- 24: Laserlicht, Puls
- 24a: Kreis, vermeintliche Abweichung Laserlicht
- 25: Strahl
- 26: Sensorelement, SPAD
- 26a: erstes Sensorelement
- 26b: zweites Sensorelement
- 26x: aktives Sensorelement
- 26y: deaktiviertes Sensorelement
- 28: Ausleseelement
- 30: Auswerteeinheit
- 32: Steuereinheit
- 34: Verbindung
- 36: Ebene Sendeeinheit
- 38: Ebene Empfangseinheit
- 40: Chip der Empfangseinheit
- 42: Chip der Sendeeinheit
- 44: Makrozelle
- DI: Durchmesser Laserlicht
- Dd: Durchmesser Detektorfläche
- De: Durchmesser Emitterelement
- Ds: Durchmesser Sensorelement

## Patentansprüche

1. LIDAR Empfangseinheit (12) in einer Focal Plane Array-Anordnung, umfassend
- mehrere Sensorelemente (26), die in Makrozellen (44) angeordnet sind, sowie mehrere Ausleseelemente (28), wobei die Ausleseelemente (28) als Zeit-Digital-Wandler ausgebildet sind, und wobei
- zumindest zwei Sensorelemente (26) einer Makrozelle (44) zugeordnet sind, wobei
- jedes Sensorelement (26) einzeln aktiviert und deaktiviert werden kann oder in Gruppen von Sensorelementen (26) aktiviert und deaktiviert werden können,
**dadurch gekennzeichnet, dass**
jedes Sensorelement (26) lediglich mit einem Ausleseelement (28) verbunden ist, wobei jedes Ausleseelement (28) mit mehreren Sensorelementen (26) verschiedener Makrozellen (44) verbunden ist, und wobei diese verschiedenen Makrozellen (44) während unterschiedlicher Messzyklen aktiv sind oder niemals zwei dieser Makrozellen (44) gleichzeitig aktiv sind.

2. LIDAR Empfangseinheit (12) nach Anspruch 1, **dadurch gekennzeichnet, dass** die Sensorelemente (26) einer erste Makrozelle (44) mit zumindest einem ersten Ausleseelement (28) verbunden sind und die Sensorelemente (26) der zweiten Makrozelle (44) mit zumindest einem zweiten Ausleseelement (28) verbunden sind.

3. LIDAR Empfangseinheit (12) nach einem der Ansprüche 1 oder 2, **dadurch gekennzeichnet, dass** alle Sensorelemente (26) einer Makrozelle (44) mit demselben Ausleseelement (28) verbunden sind.

4. LIDAR Empfangseinheit (12) nach einem der vorangehenden Ansprüche, welches von einer LIDAR Sendeeinheit (14) mit mehreren Emitterelementen (22) in Form von Lasern emittiertes und an einem Objekt (22) reflektiertes Laserlicht (24) detektiert,
die Anzahl der Sensorelemente (26) der Empfangseinheit (12) größer ist als die Anzahl der Emitterelemente (22) der Sendeeinheit (14).

5. LIDAR Empfangseinheit (12) nach Anspruch 4, **dadurch gekennzeichnet, dass** die durch die Sensorelemente (26) einer Makrozelle (44) abgedeckte Detektorfläche im Wesentlichen dem doppelten, dem dreifachen oder dem vierfachen der Fläche des eintreffenden Laserlichts (24) oder der Fläche eines Emitterelements (22) entspricht.

6. LIDAR Empfangseinheit (12) nach Anspruch 4 oder 5, **dadurch gekennzeichnet, dass** ein Durchmesser einer Detektorfläche (Dd) der Makrozelle (44) zumindest dem Doppelten eines Laserlichtdurchmessers (Dl) oder eines Durchmessers (De) eines Emitterelements (22) entspricht.

7. LIDAR Empfangseinheit (12) nach einem der vorangehenden Ansprüche,
- wobei erste Sensorelemente (26a) in einer Ebene (38) der Empfangseinheit (12) im Wesentlichen dieselbe räumliche Konfiguration aufweisen wie die Emitterelemente (22) der Sendeeinheit (14) und
- zweite Sensorelemente (26b) in den Zwischenräumen zwischen den ersten Sensorelementen (26) angeordnet sind und / oder um die ersten Sensorelemente (26) herum angeordnet sind.

8. LIDAR Empfangseinheit (12) nach Anspruch 7, **dadurch gekennzeichnet, dass** ein Durchmesser einer Detektorfläche (Dd) des ersten Sensorelements (26a) und der zweiten Sensorelemente (26b) einer Makrozelle (44) zumindest dem doppelten Durchmesser (Dl) des eintreffenden Laserlichts (24) oder der Fläche (De) des zugehörigen Emitterelements (22) der Sendeeinheit (14) entspricht.

## Claims

1. LIDAR receiver unit (12) in a focal plane array arrangement, comprising
- several sensor elements (26), which are arranged in macrocells (44), as well as several readout elements (28), wherein the readout elements (28) are configured as time-to-digital converters, and wherein
- at least two sensor elements (26) are assigned to a macrocell (44), wherein
- each sensor element (26) can be activated and deactivated individually or can be activated and deactivated in groups of sensor elements (26),
**characterized in that** each sensor element (26) is connected to only one readout element (28), wherein each readout element (28) is connected to several sensor elements (26) of different macrocells (44), and wherein these different macrocells (44) are active during different measurement cycles or never two of these macrocells (44) are active simultaneously.

2. LIDAR receiver unit (12) according to claim 1, **characterized in that** the sensor elements (26) of a first macrocell (44) are connected to at least one first readout element (28) and the sensor elements (26) of the second macrocell (44) are connected to at least one second readout element (28).

3. LIDAR receiver unit (12) according to one of claims 1 or 2, **characterized in that** all sensor elements (26) of a macrocell (44) are connected to the same readout element (28).

4. LIDAR receiver unit (12) according to one of the preceding claims,
which detects laser light (24) emitted by a LIDAR transmitter unit (14) with several emitter elements (22) in the form of lasers and reflected at an object (22),
the number of sensor elements (26) of the receiver unit (12) is greater than the number of emitter elements (22) of the transmitter unit (14).

5. LIDAR receiver unit (12) according to claim 4, **characterized in that** the detector area covered by the sensor elements (26) of a macrocell (44) essentially corresponds to twice, three times or four times the area of the incident laser light (24) or the area of an emitter element (22).

6. LIDAR receiver unit (12) according to claim 4 or 5, **characterized in that** a diameter of a detector area (Dd) of the macrocell (44) corresponds to at least twice a laser light diameter (DI) or a diameter (De) of an emitter element (22).

7. LIDAR receiver unit (12) according to one of the preceding claims,
- wherein first sensor elements (26a) in a plane (38) of the receiver unit (12) have substantially the same spatial configuration as the emitter elements (22) of the transmitter unit (14), and
- second sensor elements (26b) are arranged in the spaces between the first sensor elements (26) and/or are arranged around the first sensor elements (26).

8. LIDAR receiver unit (12) according to claim 7, **characterized in that** a diameter of a detector area (Dd) of the first sensor element (26a) and the second sensor elements (26b) of a macrocell (44) corresponds to at least twice the diameter (DI) of the incident laser light (24) or the area (De) of the associated emitter element (22) of the transmitter unit (14).

## Revendications

1. Unité de réception LIDAR (12) dans une configuration de réseau plan focal, comprenant
- plusieurs éléments de détection (26) qui sont disposés dans des macrocellules (44), ainsi que plusieurs éléments de lecture (28), les éléments de lecture (28) étant conçus comme des convertisseurs temps-numérique, et dans lequel
- au moins deux éléments de détection (26) sont associés à une macrocellule (44), où
- chaque élément de détection (26) peut être activé et désactivé individuellement ou peut être activé et désactivé par groupes d'éléments de détection (26),
**caractérisé en ce que** chaque élément de détection (26) est relié uniquement à un élément de lecture (28), chaque élément de lecture (28) étant relié à plusieurs éléments de détection (26) de différentes macrocellules (44), et ces différentes macrocellules (44) étant actives pendant différents cycles de mesure ou deux de ces macrocellules (44) n'étant jamais actives simultanément.

2. Unité de réception LIDAR (12) selon la revendication 1, **caractérisée en ce que** les éléments de détection (26) d'une première macrocellule (44) sont reliés à au moins un premier élément de lecture (28) et les éléments de détection (26) de la deuxième macrocellule (44) sont reliés à au moins un deuxième élément de lecture (28).

3. Unité de réception LIDAR (12) selon l'une des revendications 1 ou 2, **caractérisée en ce que** tous les éléments de détection (26) d'une macrocellule (44) sont reliés au même élément de lecture (28).

4. Unité de réception LIDAR (12) selon l'une des revendications précédentes,
qui détecte la lumière laser (24) émise par une unité d'émission LIDAR (14) comportant plusieurs éléments émetteurs (22) sous forme de lasers et réfléchie sur un objet (22),
le nombre des éléments de détection (26) de l'unité de réception (12) est supérieur au nombre des éléments d'émission (22) de l'unité d'émission (14).

5. Unité de réception LIDAR (12) selon la revendication 4, **caractérisée en ce que** la surface de détection couverte par les éléments de détection (26) d'une macrocellule (44) correspond sensiblement au double, au triple ou au quadruple de la surface de la lumière laser incidente (24) ou de la surface d'un élément émetteur (22).

6. Unité de réception LIDAR (12) selon la revendication 4 ou 5, **caractérisée en ce qu'**un diamètre d'une surface de détection (Dd) de la macrocellule (44) correspond à au moins deux fois un diamètre de lumière laser (DI) ou un diamètre (De) d'un élément émetteur (22).

7. Unité de réception LIDAR (12) selon l'une des revendications précédentes,
- dans lequel des premiers éléments de capteur (26a) dans un plan (38) de l'unité de réception (12) ont sensiblement la même configuration spatiale que les éléments d'émetteur (22) de l'unité d'émission (14) et
- des deuxièmes éléments de détection (26b) sont disposés dans les espaces intermédiaires entre les premiers éléments de détection (26) et/ou sont disposés autour des premiers éléments de détection (26).

8. Unité de réception LIDAR (12) selon la revendication 7, **caractérisée en ce qu'**un diamètre d'une surface de détection (Dd) du premier élément de détection (26a) et des deuxièmes éléments de détection (26b) d'une macrocellule (44) correspond au moins au double du diamètre (DI) de la lumière laser entrante (24) ou de la surface (De) de l'élément émetteur (22) correspondant de l'unité d'émission (14).
